# FASCICULE DE BREVET EUROPEEN

(11) **EP 1 909 006 B1**
(45) Date de publication et mention de la délivrance du brevet: **25.05.2011**
(21) Numéro de dépôt: 07116238.2
(22) Date de dépôt: 12.09.2007
(51) Int. Cl.: F16K 11/074, B05D 7/24, C23C 16/04, C23C 16/50, B29C 49/42

(54) **Distributeur tournant de pression et machine carrousel de traitement de corps creux qui en est equipée**
Druckdrehverteiler und Karussellmaschine zur Behandlung von Hohlkörpern, die damit ausgerüstet ist
Revolving pressure distributor and rotating machine for treating hollow bodies equipped with same

(30) Priorité: 02.10.2006 FR 0608626
(43) Date de publication de la demande: 09.04.2008
(73) Titulaire: Sidel Participations, 76930 Octeville Sur Mer (FR)
(72) Inventeur: Danel, Laurent c/o Sidel Participations, 76930 Octeville sur Mer (FR); Mouchelet, Marc c/o Sidel Participations, 76930 Octeville sur Mer (FR)
(74) Mandataire: Cabinet Plasseraud

(56) Documents cités:
- WO-A-2005/025722
- BE-A1- 904 017
- FR-A1- 2 791 598
- US-A- 5 810 049

## Description

La présente invention concerne d'une façon générale le domaine du traitement de corps creux, et notamment de bouteilles, dans plusieurs postes de traitement identiques destinés chacun à prendre en charge au moins un corps creux et dans lequel, pour au moins une étape du traitement, on met le poste de traitement en communication avec une source de pression, notamment sensiblement inférieure à la pression atmosphérique, par l'intermédiaire d'un distributeur tournant étanche.

Plus spécifiquement, l'invention concerne des perfectionnements apportés aux distributeurs tournants de pression pour des machines à carrousel de traitement de corps creux comportant plusieurs postes de traitement identiques destinés chacun à prendre en charge au moins un corps creux, ces distributeurs tournants comportant deux couronnes coaxiales, l'une fixe et l'autre rotative, qui sont en contact l'une contre l'autre de manière étanche par des faces de contact respectives en vis-à-vis définissant un plan de joint, la couronne rotative comportant des orifices de communication propres à être reliés chacun à au moins un poste de traitement et débouchant dans la face de contact de ladite couronne rotative, lesdits orifices étant répartis sur plusieurs circonférences concentriques de diamètres différents, la couronne fixe comportant plusieurs lumières propres à être reliées à une source de pression de la machine et débouchant dans la face de contact de ladite couronne fixe, lesdites lumières étant réparties sur des circonférences concentriques en nombre égal et de même diamètre que celles des susdits orifices de manière qu'au moins une lumière se trouve sur la trajectoire des orifices de chaque circonférence de la couronne rotative de telle sorte qu'au moins un poste de traitement soit mis en communication avec la source de pression lorsque l'orifice correspondant se trouve en regard de la lumière respective.

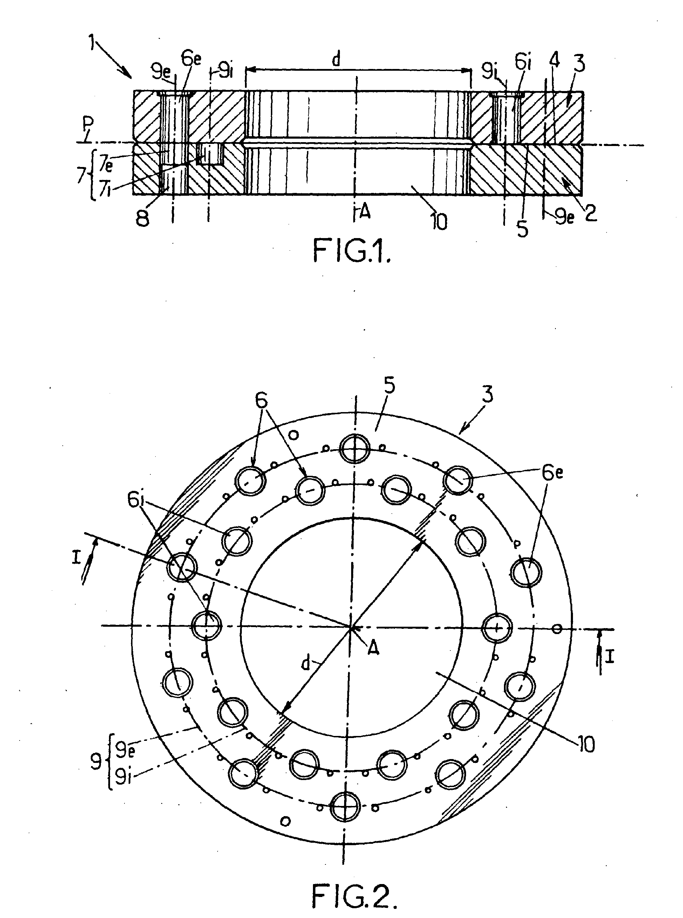

Un distributeur tournant de ce type est décrit dans le document FR 2 791 598 au nom de la Demanderesse et qui décrit les caractéristiques du préambule de la revendication 1. En se reportant à la figure 1 des dessins annexés, le distributeur tournant, désigné dans son ensemble par la référence 1, comporte deux couronnes 2, 3 coaxiales, en principe d'axe A sensiblement vertical dans les conditions d'utilisation comme montré à la figure 1. L'une des couronnes (celle 2 située en dessous sur la figure 1) est fixe et l'autre couronne (celle 3 située au dessus sur la figure 1) est rotative. Elles sont en contact l'une contre l'autre de manière étanche par des faces 4, 5 de contact respectives en vis-à-vis définissant un plan P de joint. La couronne 3 rotative comporte des orifices de communication, désignés génériquement par la référence 6, qui sont propres à être raccordés chacun à au moins un poste de traitement individuel d'un récipient et qui débouchent dans la face 5 de contact de ladite couronne 3 rotative. La couronne 2 fixe comporte au moins une lumière, désignée génériquement par la référence 7, qui est propre à être raccordée, en 8, à une source de pression de la machine et qui débouche dans la face 4 de contact de ladite couronne 2 fixe de manière à se trouver sur la trajectoire des orifices 6 de la couronne 3 rotative ; ainsi, un poste de traitement est mis en communication avec la source de pression lorsque l'orifice 6 correspondant se trouve en regard de la lumière 7.

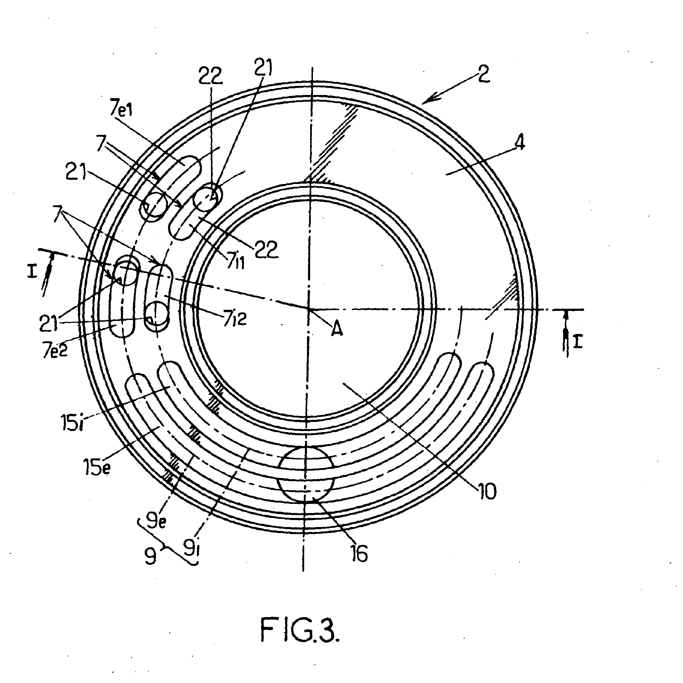

Dans sa conception telle que décrite et représentée dans le document FR 2 791 598, le distributeur 1 tournant est agencé avec des orifices 6 de raccordement aux postes de traitement qui sont répartis sur deux circonférences, désignées génériquement par la référence 9, de diamètres différents (les orifices situés sur ces deux circonférences respectivement extérieure 9e et intérieure 9i sont désignés 6e, 6i respectivement) et avec au moins deux lumières 7e, 7i de raccordement à au moins une source de pression qui sont situées, elles aussi, sur deux circonférences, désignées elles aussi par les références 9e, 9i, de mêmes diamètres que celles des susdits orifices 6e, 6i. Cet agencement se voit bien sur la figure 2 des dessins annexés qui est une vue de dessous de la couronne 3 rotative, ainsi que sur la figure 3 qui est une vue de dessus de la couronne 2 fixe. Sur la figure 3, il apparaît que les lumières 7 sont réparties en plusieurs groupes correspondant à la génération de plusieurs niveaux de pression : deux lumières 7e₁, 7i₁ sont reliées respectivement à des pompes servant à une première étape de pompage (pompage à un premier niveau de vide) ; deux lumières 7e₂, 7i₂ sont reliées respectivement à des pompes servant une seconde étape de pompage (pompage à un second niveau, inférieur, de vide). De plus, deux lumières 15e, 15i sont reliées toutes les deux, par l'intermédiaire d'un conduit 16 unique commun, à une pompe servant à une étape d'exploitation du vide (par exemple dépôt d'une couche d'un matériau tel que du carbone sur une face -notamment la face interne- d'un récipient en matière thermoplastique tel que du PET par mise en oeuvre d'un plasma basse pression).

Dans cet agencement connu, la distance radiale entre les deux circonférences 9e et 9i n'est pas très élevée (typiquement de l'ordre de grandeur du diamètre d'un orifice 6 comme on peut le voir sur la figure 2) alors que la circonférence intérieure 9i est distante d'environ 6 diamètres d'orifice 6 de l'axe A du distributeur tournant.

Cet agencement connu est actuellement exploité dans des machines rotatives ayant typiquement 20 postes de traitement, et il donne entièrement satisfaction.

Cependant, les fabricants de récipients, et notamment de bouteilles, souhaitent de façon récurrente accroître les cadences de production. Pour certains traitements (par exemple le dépôt d'une couche barrière notamment en carbone sur la face intérieure de récipients en matière thermoplastique telle que du PET par mise en oeuvre d'un plasma basse pression), la vitesse de déroulement du processus de traitement au niveau de chaque poste ne peut pas être accrue de façon notable. Une augmentation importante de la cadence de production ne peut alors être envisagée qu'en augmentant le nombre des postes de traitement. C'est ainsi que la Demanderesse envisage de développer une nouvelle machine dans laquelle le nombre des postes de traitement est notablement accru, typiquement est plus que doublé (48 postes).

Au niveau du distributeur tournant, cela peut se traduire par un accroissement correspondant des liaisons à assurer, c'est-à-dire typiquement par au moins un doublement du nombre des orifices de communication à prévoir sur la couronne rotative.

Cependant, les couronnes du distributeur tournant sont des pièces de grande dimension qui sont très lourdes ; typiquement, dans les machines actuelles équipées de 20 postes de traitement, les couronnes ont un diamètre d'environ 0,60 mètre et un poids individuel de l'ordre de 120 kg. S'il est possible d'en augmenter encore quelque peu le diamètre extérieur, la capacité des machines nécessaires à la fabrication de ces couronnes impose toutefois une limite qu'il n'est pas possible de franchir, ce qui pourtant serait nécessaire pour répartir le nombre accru d'orifices de communication sur le même nombre (typiquement deux) de circonférences de diamètres différents.

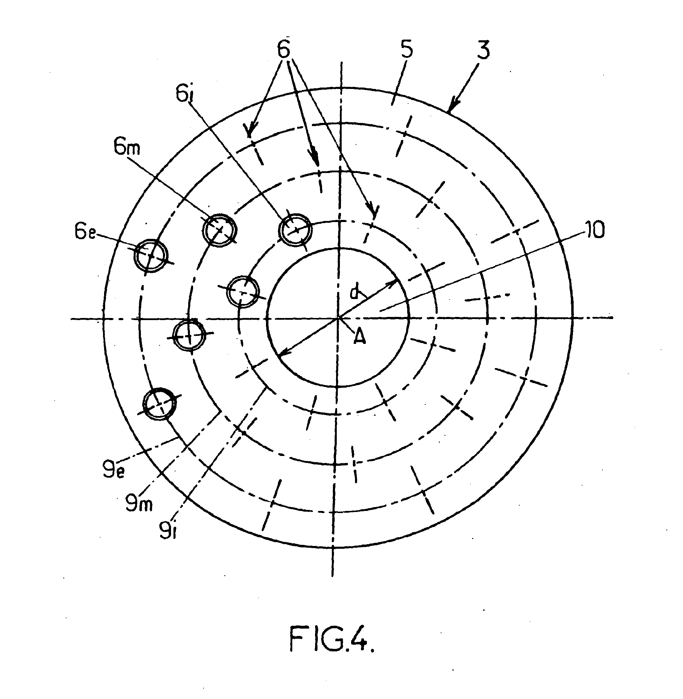

Pour conserver aux couronnes approximativement leur diamètre actuel, il est donc nécessaire de répartir les orifices de communication sur un plus grand nombre (typiquement trois, voire quatre) de circonférences de diamètres différents. Cet objectif est possible à atteindre en réduisant le diamètre de l'évidement 10 central des couronnes 2, 3 et en occupant au maximum la surface disponible dans les couronnes. A titre d'exemple, la figure 4 montre en vue de dessous une couronne 3 rotative agencée selon une configuration de ce type avec les orifices 6 répartis en trois groupes 6e, 6m, 6i situés respectivement sur trois circonférences 9e, 9m, 9i respectivement extérieure, médiane et intérieure.

Toutefois dans ce cas, comme on peut le voir à la figure 4, le diamètre de la circonférence 9e extérieure est quasiment le double du diamètre de la circonférence 9i intérieure et la circonférence 9i intérieure n'est plus distante de l'axe A que d'environ 3 diamètres d'orifices 6. Cela entraîne que la vitesse linéaire de déplacement des orifices 6e situés sur la circonférence 9e extérieure est quasiment le double de celle des orifices 6i situés sur la circonférence 9i intérieure. Par conséquent, avec les orifices 6 ayant tous une conformation identique -ici circulaire de même diamètre- comme illustré à la figure 4, les vitesses d'ouverture et de fermeture des passages définis par la coïncidence d'un orifice 6 avec une lumière 7 associée ne sont pas les mêmes selon les circonférences : cette vitesse est plus élevée pour les orifices 6e situés sur la circonférence extérieure 9e que pour les orifices 6i situés sur la circonférence 9i intérieure. Il en résulte que tous les postes de traitement ne reçoivent pas la pression de façon identique et que de ce fait tous les récipients ne sont pas traités de façon analogue selon le positionnement de l'orifice de commande sur le distributeur tournant.

Une telle inégalité dans la qualité de traitement des récipients n'est pas admissible.

L'invention a pour but de proposer un agencement perfectionné du distributeur tournant qui permette de répondre aux exigences de la pratique en matière de qualité des traitements appliqués aux récipients, sans accroissement sensible du diamètre extérieur des couronnes, sans modification structurelle profonde du distributeur tournant, et sans surcoût important dans la fabrication et l'entretien du distributeur tournant.

A ces fins, l'invention, conformément à la revendication 1, propose un distributeur tournant de fluide sous pression pour une machine à carrousel de traitement de corps creux du type exposé au préambule qui, étant agencé selon l'invention, se caractérise en ce que les orifices et/ou les lumières disposés sur les circonférences différentes possèdent des extrémités antérieures et postérieures, considérées dans le sens de rotation de la couronne rotative, qui sont conformées de manière que, lors du glissement des orifices en regard de lumières respectives, la vitesse d'accroissement à l'ouverture et la vitesse de décroissement à la fermeture de la surface du passage défini par chaque orifice et la lumière associée soit sensiblement la même sur toutes les circonférences.

Dans un mode de réalisation préféré en pratique, on prévoit que tous les orifices et/ou les lumières ont sensiblement la même dimension radiale et que les bords antérieur et postérieur, considérés dans le sens de rotation de la couronne rotative, des orifices et/ou les lumières ont des rayons de courbure sensiblement plus grands pour les orifices et/ou les lumières situés sur au moins la circonférence de plus faible diamètre et sensiblement plus petits pour les orifices et/ou les lumières situés sur la circonférence de plus grand diamètre. Notamment, les bords antérieur et postérieur des orifices et/ou les lumières situés sur au moins la circonférence de plus faible diamètre peuvent avantageusement être sensiblement rectilignes et dirigés sensiblement radialement ; en particulier, les orifices et/ou les lumières situés sur au moins la circonférence de plus faible diamètre peuvent être de forme approximativement trapézoïdale à angles arrondis.

De préférence, il est souhaitable de combiner l'une et/ou l'autre des dispositions précédentes avec celle consistant en ce que les orifices de la couronne rotative possèdent sensiblement la même longueur angulaire sur toutes les circonférences et/ou que les lumières de la couronne fixe possèdent sensiblement la même longueur angulaire sur toutes les circonférences, de sorte que la durée de mise en communication de chaque poste avec la source de pression est la même pour tous les orifices quel que soit leur emplacement sur la couronne rotative.

Comme cela ressort clairement des explications exposées ci-dessus, un distributeur tournant agencé comme il vient d'être exposé conformément à l'invention peut trouver une application particulièrement intéressante dans une machine à carrousel pour le traitement de corps creux, du type comportant plusieurs postes identiques de traitement propres à prendre en charge au moins un corps creux, ladite machine étant équipée d'un distributeur tournant propre, pour au moins une étape de traitement, à mettre successivement chaque poste de traitement en communication avec au moins une source de pression, en particulier de pression inférieure, voire très inférieure à la pression atmosphérique. Dans une application préférée, il peut s'agir d'une machine de dépôt, à l'aide d'un plasma basse pression, d'un revêtement barrière, notamment en carbone, sur la face interne de corps creux, notamment de bouteilles, en matériau thermoplastique, notamment en PET, telle par exemple la machine décrite dans le document FR 2 776 540 au nom de la Demanderesse.

L'invention sera mieux comprise à la lecture de la description qui suit de certains modes de réalisation préférés donnés à titre d'exemples purement illustratifs. Dans cette description, on se réfère aux dessins annexés sur lesquels :
- la figure 1 est une vue de côté, en coupe diamétrale selon la ligne I-I des figures 2 et 3, d'un distributeur tournant de l'état de la technique tel que divulgué dans le document FR 2 791 598 au nom de la Demanderesse ;
- la figure 2 est une vue de dessous de la couronne rotative du distributeur tournant de la figure 1 ;
- la figure 3 est une vue de dessus de la couronne fixe du distributeur tournant de la figure 1 ;
- la figure 4 est une vue de dessous d'une couronne rotative d'un distributeur tournant modifié de façon théorique pour le raccordement d'un nombre accru de postes de traitement ;
- la figure 5 est une vue de dessous d'un mode de réalisation préféré d'une couronne rotative d'un distributeur tournant agencé conformément à l'invention ;
- la figure 6 est une vue de dessus d'un mode de réalisation préféré d'une couronne fixe d'un distributeur tournant agencé conformément à l'invention ; et
- la figure 7 est une vue schématique de dessus à plus grande échelle illustrant le fonctionnement des dispositions conformes à l'invention.

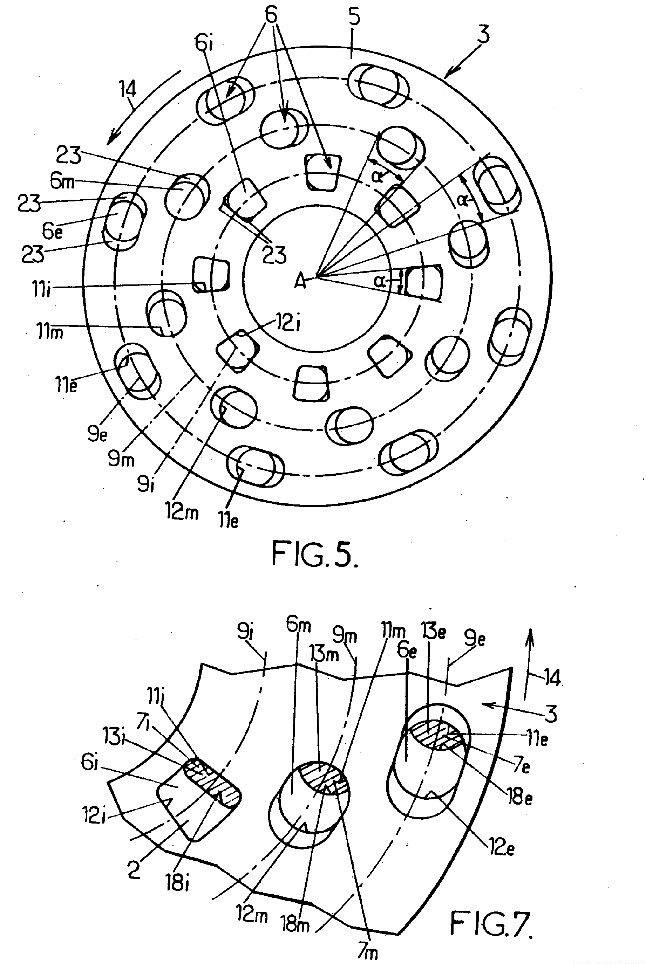

On se réfère maintenant plus spécifiquement aux figures 5 à 7 sur lesquelles les organes ou parties analogues à ceux des figures 2 à 4 sont désignés par les mêmes références numériques.

Comme indiqué plus haut, le but qui est à la base de l'invention est l'obtention de conditions de fonctionnement identiques de tous les postes de travail de la machine, laquelle identité des conditions de fonctionnement conditionne l'obtention de récipients tous traités de façon identique et possédant tous la même qualité. Notamment, cette identité des conditions de fonctionnement de tous les postes de la machine implique que la pression soit communiquée à tous les postes de façon strictement identique et pendant des intervalles de temps égaux pour tous les postes, et ceci quelle que soit la position radiale du passage correspondant dans le distributeur tournant. Or les orifices 6 respectifs de la couronne 3 rotative ont des vitesses linéaires différentes selon la circonférence sur laquelle ils se trouvent et cette vitesse linéaire influe sur la vitesse de variation (accroissement à l'ouverture, décroissement à la fermeture) des passages définis par les couples orifice 6/lumière 7: les passages situés sur des circonférences de plus petit diamètre s'ouvrent, respectivement se ferment plus lentement que les passages situés sur des circonférences de plus grand diamètre. Pour compenser l'influence défavorable de la vitesse de déplacement des orifices situés sur des circonférences de diamètres différents dans la couronne 3 rotative, il faut conformer de façon appropriée les éléments de définition des passages, à savoir les orifices 6 et/ou les lumières 7.

Diverses solutions techniques sont susceptibles de conduire à l'obtention d'une telle vitesse identique de variation de la surface des passages par adaptation des formes et/ou des dimensions des orifices 6 et/ou des lumières 7 respectives. Toutefois, dans le souci de limiter le nombre des pièces à modifier par rapport à l'état de la technique, et plus précisément pour ne modifier qu'une seule pièce à savoir la couronne 3 rotative, l'invention prévoit que seuls les orifices 6 de la couronne 3 rotative sont adaptés en relation avec la caractéristique recherchée, comme montré aux figures 4 et 5. Dans ce contexte, les lumières 7 de la couronne 2 fixe possèdent toutes la même largeur (dimension radiale) et possèdent des extrémités de forme semi-circulaire selon la configuration antérieure.

Ainsi, conformément à l'invention et comme montré aux figures 5 à 7, on prévoit que les orifices 6 et/ou les lumières 7 disposés sur les circonférences 9 différentes possèdent des extrémités antérieure et postérieure, considérées dans le sens de rotation (flèche 14) de la couronne 3 rotative, qui sont conformées de manière que, lors du glissement des orifices 6 de la couronne 3 rotative en regard des lumières 7 respectives de la couronne 2 fixe, la vitesse d'accroissement, à l'ouverture, et la vitesse de décroissement, à la fermeture, de la surface du passage 13 (zones hachurées sur la figure 7) défini par la coïncidence de chaque orifice 6 et de la lumière 7 correspondante soit sensiblement la même et d'une valeur aussi élevée que possible sur toutes les circonférences 9.

Avantageusement alors, tous les orifices 6 ont sensiblement la même dimension radiale (largeur), comme cela était du reste le cas dans l'agencement antérieur, et cette dimension radiale est de préférence la même que celle des lumières 7 de la couronne 2 fixe.

En pratique, bien que l'aménagement des seuls orifices 6 de la couronne 3 rotative ou des seules lumières 7 de la couronne 2 fixe puisse permettre de répondre aux attentes, on prévoit cependant avantageusement d'aménager conjointement les orifices 6 et les lumières 7.

Pour ce qui concerne tout d'abord la couronne 3 rotative, comme montré à la figure 5 la disposition conforme à l'invention peut consister en ce que les bords 11, 12 respectivement antérieurs et postérieurs, considérés dans le sens 14 de rotation de la couronne 3 rotative, des orifices 6 possèdent des rayons de courbure relativement plus grands pour les orifices 6i situés sur au moins la circonférence 9i de plus faible diamètre et relativement plus petits pour les orifices 6e situés sur la circonférence 9e de plus grand diamètre.

Toutefois, sur les circonférences 9 éloignées de l'axe de rotation A les différences entre les rayons de courbure deviennent minimes et peuvent être négligées, de sorte que l'on peut alors donner le même rayon de courbures aux orifices situés sur ces circonférences. Ainsi, dans l'exemple de réalisation montré à la figure 5, on a donné sensiblement le même rayon de courbure aux extrémités des orifices 6e et 6m situés respectivement sur les circonférences 9e extérieure et 9m médiane, tandis que seuls les orifices 6i situés sur la circonférence 9i intérieure ont leurs extrémités pourvues d'un rayon de courbure différent sensiblement plus grand.

Compte tenu de la proximité de la circonférence 9i intérieure de l'axe A de rotation de la couronne 3 rotative, une vitesse de variation des passages 13i sensiblement identique à la vitesse de variation des passages 13e et 13m est obtenue en prévoyant que les bords 11i, 12i antérieur et postérieur des orifices 6i situés sur la circonférence 9i de plus faible diamètre possèdent un rayon de courbure très grand, de sorte que, compte tenu de la relativement faible étendue radiale de ces bords, ils sont alors sensiblement rectilignes et dirigés sensiblement radialement. Il est alors aisé de fabriquer les orifices 6i situés sur la circonférence 9i de plus faible diamètre avec une forme approximativement trapézoïdale à angles arrondis, voire de préférence, eu égard aux étendues relativement faibles de leurs bords circonférentiels par rapport au diamètre de la circonférence 9i intérieure, avec une forme trapézoïdale isocèle.

Les dispositions qui viennent d'être exposées relativement aux conformations des orifices en fonction de leur position radiale sur la couronne 3 rotative constituent un compromis permettant de réduire autant que faire se peut les coûts d'usinage. En effet, la réalisation d'orifices de forme générale trapézoïdale à angles arrondis ne peut être effectuée que par un détourage le long du contour requis à l'aide d'une fraise de petit diamètre ; il s'agit d'un travail long et coûteux. Par contre, la réalisation d'orifices de forme générale en « haricot » à extrémités arrondies peut être effectuée à l'aide d'une fraise d'un diamètre égal à la largeur de l'orifice, en une seule passe ; ce travail peut être mené rapidement et de façon simple, et il est donc moins onéreux.

Ainsi, dans l'exemple typiquement illustré à la figure 5, la majorité des orifices (les orifices 6e, 6m situés sur les deux circonférences 9e, 9m) peuvent être usinés dans des conditions relativement économiques, tandis que seuls les orifices 6i de la circonférence 9i intérieure (soit un tiers des orifices seulement dans cet exemple) ont à être usinés dans des conditions plus onéreuses.

Toujours dans la perspective de définir des passages qui sont tous identiques indépendamment de leur situation dans le distributeur tournant, il est préférable de reconduire une disposition déjà mise en oeuvre dans les distributeurs tournants antérieurs, qui consiste en ce que les orifices 6 de la couronne 3 rotative aient sensiblement la même longueur angulaire sur toutes les circonférences 9, ce qui se traduit par des longueurs développées croissantes pour les orifices 6 situés sur des circonférences 9 de diamètres croissants. A la figure 4, on a désigné par α l'étendue angulaire identique de chacun des orifices 6e, 6m et 6i situés respectivement sur les circonférences 9e, 9m et 9i.

On peut également prévoir que les orifices 6 soient en nombre égal sur toutes les circonférences 9 et soient disposés décalés angulairement les uns par rapport aux autres d'une circonférence à la circonférence adjacente comme visible à la figure 4, cette disposition autorisant un rapprochement optimum des circonférences 9 (plus grande densité des orifices 6 dans la face 5 de la couronne 3) tout en laissant la place libre nécessaire pour positionner les raccords respectifs sur la face externe de la couronne 3 rotative.

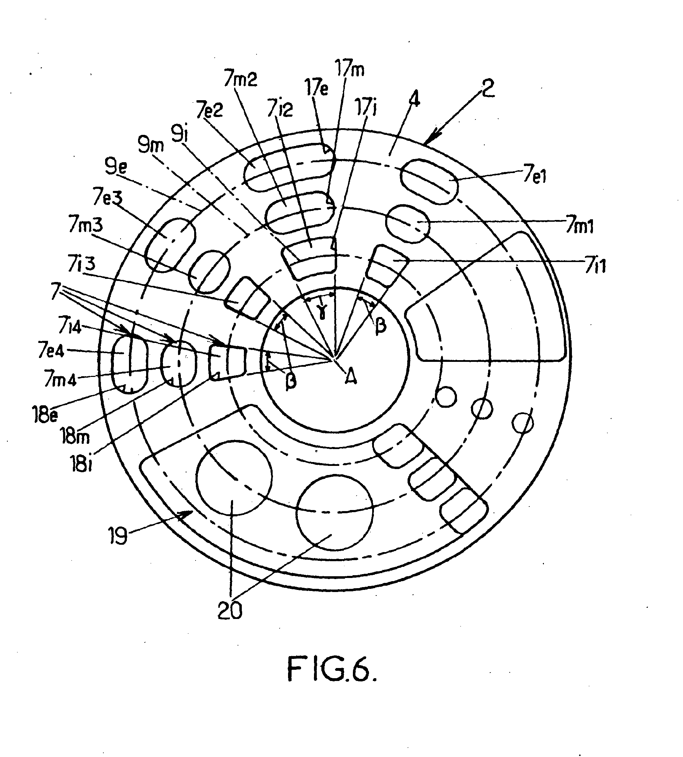

Pour ce qui concerne maintenant la couronne 2 fixe, comme montré à la figure 6 les lumières 7 sont agencées d'une manière analogue à ce qui a été décrit plus haut pour les orifices 6 de la couronne 3 rotative. Autrement dit, les lumières 7, séparées dans l'exemple illustré en quatre groupes désignés par un indice 1 à 4 correspondant respectivement à quatre niveaux de pression à appliquer dans les enceintes raccordées aux orifices 6, sont réparties en trois séries désignées par 7e, 7m et 7i disposées respectivement sur trois circonférences 9e extérieure, 9m médiane et 9i intérieure.

Les bords 17, 18 respectivement antérieurs et postérieurs des lumières 7 (on conviendra de désigner par bord 17 antérieur celui qui coopère avec le bord antérieur 11 d'un orifice 6 correspondant lors de l'ouverture d'un passage 13 et par bord 18 postérieur celui qui coopère avec le bord postérieur 12 d'un orifice 6 correspondant lors de la fermeture d'un passage 13) sont conformés dans les mêmes conditions que ce qui a été exposé plus haut pour les orifices 6, avec des rayons de courbure relativement plus faibles pour les lumières 7e situées sur la circonférence 9e extérieure et des rayons de courbure relativement plus grands pour les lumières 7i situées sur la circonférence 9i intérieure ; typiquement, dans l'exemple illustré les lumières 7e et 7m situées respectivement sur les circonférences 9e extérieure et 9m médiane possèdent des bords 17e, 17m antérieurs et 18e, 18m postérieurs de même rayon de courbure, tandis que les lumières 7i situées sur la circonférence 9i intérieure possèdent des bords 17i antérieurs et 18i postérieurs sensiblement rectilignes radialement de sorte que les lumières 7i sont agencées sous forme trapézoïdale à angles arrondis, notamment sous forme trapézoïdale isocèle.

Les lumières 7 possèdent des dimensions radiales (largeurs) égales à celles correspondantes des orifices 6 ; typiquement, toutes les lumières 7 possèdent la même largeur, égale à celle commune des orifices 6.

Toutes les lumières 7 d'un même groupe (même indice de 1 à 4 dans l'exemple de la figure 6) possèdent une même étendue angulaire sur toutes les circonférences 9, ce qui se traduit par des longueurs développées croissantes pour les lumières 7 situées sur les circonférences 9 de diamètres croissants. Dans l'exemple typique illustré à la figure 6, pour répondre à des exigences de fonctionnement spécifiques les lumières 7 appartenant aux groupes 1, 3 et 4 possèdent sensiblement la même étendue angulaire désignée par β, tandis que les lumières 7 du groupe 2 possèdent une étendue angulaire supérieure désignée par γ.

Pour ce qui est maintenant du raccordement des orifices 6 à une pompe servant à une étape d'exploitation du vide (typiquement pour le dépôt d'une couche d'un matériau barrière sur une face -notamment la face interne- d'un récipient en matière thermoplastique tel que du PET par mise en oeuvre d'un plasma basse pression), la couronne 2 fixe est munie d'une lumière 19 qui est dimensionnée radialement pour s'étendre en regard de toutes les rangées d'orifices (ici des trois rangées d'orifices 6e, 6m et 6i) et qui est en communication avec un conduit 20 (ou deux conduits comme illustré afin de disposer d'une section appropriée) raccordé à cette pompe. La lumière 19 est à bords antérieur et postérieur sensiblement rectilignes radialement et possède une forme générale sensiblement trapézoïdale curviligne.

Pour mieux fixer les idées, à la figure 7 on a représenté, en vue de dessus et à échelle agrandie, trois orifices 6e, 6m et 6i de la couronne 3 rotative, ramenés dans un même alignement radial, en correspondance partielle avec des lumières 7e, 7m et 7i de la couronne 2 fixe, et définissant trois passages 13e, 13m et 13i respectifs (hachurés sur le dessin) en cours d'ouverture (flèche 14). Ces trois passages possèdent sensiblement la même surface qui varie (croît) avec la même vitesse, laquelle est aussi élevée que possible.

Dans le dispositif de l'état de la technique correspondant au document FR 2 791 598, la couronne 2 fixe illustrée à la figure 3 des dessins annexés est pourvue de lumières 7 de formes allongées comme cela a été exposé plus haut. Ces lumières 7 allongées sont reliées à la pompe associée par l'intermédiaire de trous 21 correspondants qui débouchent dans la face inférieure de la couronne fixe 2 et sur lesquels sont raccordés les conduits de liaison (non montrés). Les trous 21 sont de section circulaire. Il en résulte, pour chaque lumière, la formation de zones 22 non débouchantes, situées d'un côté ou des deux côtés du trou 21 correspondant.

Dans le mode de réalisation conforme à l'invention de la couronne 3 tournante illustrée à la figure 5, à l'ouverture par laquelle chaque orifice 6 débouche sur la face 5 est associé un tronçon de cuvette formant une zone 23 en forme de lunule ; ces lunules peuvent être doubles et situées de part et d'autre de l'orifice correspondant (orifices 6e situés sur la circonférence extérieure 9e), simples et situées sur l'extrémité arrière de l'orifice correspondant (orifices 6m situés sur la circonférence médiane 9m), ou multiples et situées dans au moins certains angles de l'orifice polygonal (orifices 6i situés sur la circonférence intérieure 9i).

Les zones 22, 23 non débouchantes précitées des lumières, respectivement des orifices constituent des zones de rétention de graisse. Une fois remplies de graisse, ces zones ne sont plus en mesure d'assumer correctement le rôle fonctionnel qui leur est dévolu. De plus, la présence de ces zones remplies de graisse favorise la propagation de graisse dans les trous associés et les conduits qui leur sont raccordés. Il est donc nécessaire de procéder à un nettoyage régulier de ces zones non débouchantes, ce qui exige un démontage du distributeur tournant, et donc un arrêt de l'installation qui est pénalisant pour l'exploitant.

Pour éviter ces inconvénients, on prévoit de réaliser de préférence les orifices de la couronne tournante et les lumières de la couronne fixe sous forme totalement traversante, sans zones en retrait non débouchantes. Le mode de réalisation préféré de la couronne 2 fixe illustré à la figure 6 montre de façon claire cet agencement pour toutes les lumières '7. Chaque lumière 7 et chaque orifice 6 présente ainsi une section sensiblement constante sur toute l'épaisseur de la couronne respective.

Comme cela ressort de l'ensemble des explications précédentes, l'invention semble devoir trouver une application préférée, bien que non exclusive, dans une machine à carrousel pour le traitement de corps creux, du type comportant plusieurs postes identiques de traitement propres à prendre en charge au moins un corps creux, ladite machine étant équipée d'un distributeur tournant propre, pour au moins une étape de traitement, à mettre successivement chaque poste de traitement en communication avec au moins une source de pression, le distributeur tournant de la machine étant agencé selon l'invention comme il vient d'être exposé.

Une application plus spécifiquement visée par l'invention dans ce contexte concerne une machine à carrousel comme indiqué ci-dessus qui consiste en une machine de dépôt, à l'aide d'un plasma basse pression, d'un revêtement barrière, notamment en carbone, sur la face interne de corps creux, notamment de bouteilles, en matériau thermoplastique, notamment en PET, le distributeur tournant étant alors propre à distribuer au moins une pression inférieure, voire très inférieure, à la pression atmosphérique de façon séquentielle à chaque poste de traitement pour la génération du plasma requis pour le traitement précité.

## Revendications

1. Distributeur (1) tournant de pression pour une machine à carrousel de traitement de corps creux comportant plusieurs postes de traitement identiques destinés chacun à prendre en charge au moins un corps creux, ce distributeur (1) tournant comportant deux couronnes (2, 3) coaxiales, l'une (2) fixe et l'autre (3) rotative, qui sont en contact l'une contre l'autre de manière étanche par des faces (4, 5) de contact respectives en vis-à-vis définissant un plan (P) de joint, la couronne (3) rotative comportant des orifices (6) de communication propres à être reliés chacun à au moins un poste de traitement et débouchant dans la face (5) de contact de ladite couronne (3) rotative, lesdits orifices étant répartis sur plusieurs circonférences (9) concentriques de diamètres différents, la couronne (2) fixe comportant plusieurs lumières (7) propres à être reliées à une source de pression de la machine et débouchant dans la face (4) de contact de ladite couronne (2) fixe, lesdites lumières étant réparties sur des circonférences (9) concentriques en nombre égal et de même diamètre que celles des susdits orifices de manière qu'au moins une lumière se trouve sur la trajectoire des orifices (6) de chaque circonférence de la couronne (3) rotative de telle sorte qu'un poste de traitement soit mis en communication avec la source de pression lorsque l'orifice (6) correspondant se trouve en regard de la lumière (7) respective,
**caractérisé en ce que** tous les orifices (6) et/ou les lumières (7) ont sensiblement la même dimension radiale et **en ce que** les bords (11, 12) antérieur et postérieur, considérés dans le sens de rotation (14) de la couronne (3) rotative, des orifices et/ou des lumières ont des rayons de courbure sensiblement plus grands pour les orifices (6i) et/ou les lumières (7i) situés sur au moins la circonférence (9i) de plus faible diamètre et sensiblement plus petits pour les orifices (6e) et/ou les lumières (7e) situés sur la circonférence (9e) de plus grand diamètre,
ce grâce à quoi, lors du glissement des orifices (6) en regard des lumières (7) respectives de la couronne (2) fixe, la vitesse d'accroissement à l'ouverture et la vitesse de décroissement à la fermeture de la surface du passage (13) défini par chaque orifice (6) et la lumière (7) associée est sensiblement la même sur toutes les circonférences (9).

2. Distributeur tournant selon la revendication 1, **caractérisé en ce que** les bords (11i, 12i) antérieur et postérieur des orifices (6i) et/ou les lumières (7i) situés sur au moins la circonférence (9i) de plus faible diamètre sont sensiblement rectilignes et dirigés sensiblement radialement.

3. Distributeur tournant selon la revendication 2, **caractérisé en ce que** les orifices (6i) et/ou les lumières (7i) situés sur au moins la circonférence (9i) de plus faible diamètre sont de forme approximativement trapézoïdale à angles arrondis.

4. Distributeur tournant selon l'une quelconque des revendications 1 à 3, **caractérisé en ce que** les orifices (6) de la couronne (3) rotative ont sensiblement la même longueur (α) angulaire sur toutes les circonférences (9).

5. Distributeur tournant selon l'une quelconque des revendications 1 à 4, **caractérisé en ce que** les lumières (7) de la couronne (2) fixe ont sensiblement la même longueur (α) angulaire sur toutes les circonférences (9).

6. Distributeur tournant selon l'une quelconque des revendications 1 à 5, **caractérisé en ce que** toutes les lumières (7) de la couronne (2) fixe et tous les orifices (6) de la couronne (3) rotative sont réalisés totalement traversants.

7. Machine à carrousel pour le traitement de corps creux, du type comportant plusieurs postes identiques de traitement propres à prendre en charge au moins un corps creux, ladite machine étant équipée d'un distributeur (1) tournant propre, pour au moins une étape de traitement, à mettre successivement chaque poste de traitement en communication avec au moins une source de pression, **caractérisée en ce que** le distributeur (1) tournant est agencé selon l'une quelconque des revendications 1 à 6.

8. Machine à carrousel selon la revendication 7, **caractérisée en ce qu'**il s'agit d'une machine de dépôt, à l'aide d'un plasma basse pression, d'un revêtement barrière, notamment en carbone, sur la face interne de corps creux, notamment de bouteilles, en matériau thermoplastique, notamment en PET.

## Claims

1. Rotary pressure distributor (1) for carousel-type hollow-body treatment machines comprising several identical treatment stations each intended to process at least one hollow body, said rotary distributor (1) comprising two coaxial rings (2, 3), one of them (2) stationary and the other (3) rotary, which are in contact with one another in a sealed fashion via respective facing contact faces (4, 5) defining a meeting plane (P), the rotary ring (3) comprising communication orifices (6) each able to be connected to at least one treatment station and opening into the contact face (5) of said rotary ring (3), said orifices being distributed on several concentric circumferences (9) of different diameters, the stationary ring (2) comprising several slots (7) able to be connected to a pressure source of the machine and opening into the contact face (4) of said stationary ring (2), said slots being distributed over concentric circumferences (9) of which there are the same number with the same diameters as said orifices so that at least one slot lies in the path of the orifices (6) on each circumference of the rotary ring (3) so that a treatment station is placed in communication with the pressure source when the corresponding orifice (6) faces the respective slot (7), **characterized in that** all the orifices (6) and/or the slots (7) have substantially the same radial dimension and **in that** the anterior and posterior edges (11, 12), considered in the direction (14) in which the rotary ring (3) rotates, of the orifices and/or of the slots have radii of curvature that are substantially larger in the case of the orifices (6i) and/or slots (7i) situated on at least the smallest-diameter circumference (9i), and which are substantially smaller in the case of the orifices (6e) and/or slots (7e) situated on the largest-diameter circumference (9e), whereby as the orifices (6) slide past the respective slots (7) in the stationary ring (2), the rates at which the surface area of the passage (13) defined by each orifice (3) and the associated slot (7) increase upon opening and decrease upon closing are substantially the same for all the circumferences (9).

2. Rotary distributor according to Claim 1, **characterized in that** the anterior and posterior edges (11i, 12i) of the orifices (6i) and/or slots (7i) situated on at least the smallest-diameter circumference (9i) are substantially straight and are directed substantially radially.

3. Rotary distributor according to Claim 2, **characterized in that** the orifices (6i) and/or slots (7i) situated on at least the smallest-diameter circumference (9i) are of approximately trapezoidal shape with rounded corners.

4. Rotary distributor according to any one of Claims 1 to 3, **characterized in that** the orifices (6) in the rotary ring (3) have substantially the same angular length (α) over all the circumferences (9).

5. Rotary distributor according to any one of Claims 1 to 4, **characterized in that** the slots (7) in the stationary ring (2) have substantially the same angular length (α) over all the circumferences (9).

6. Rotary distributor according to any one of Claims 1 to 5, **characterized in that** all the slots (7) in the stationary ring (2) and all the orifices (6) in the rotary ring (3) pass all the way through.

7. Carousel-type machine for treating hollow bodies, of the type comprising several identical treatment stations able to process at least one hollow body, said machine being equipped with a rotary distributor (1) able, for at least one treatment step, to place each treatment station in turn in communication with at least one pressure source, **characterized in that** the rotary distributor (1) is arranged according to any one of Claims 1 to 6.

8. Carousel-type machine according to Claim 7, **characterized in that** it is a machine for depositing a barrier coating, particularly of carbon, onto the internal face of the hollow bodies, particularly bottles, made of thermoplastic, particularly PET, using a low-pressure plasma.

## Patentansprüche

1. Druckdrehverteiler (1) für eine Karussellmaschine zur Behandlung von Hohlkörpern, aufweisend mehrere identische Behandlungsstationen, eine jede zur Übernahme mindestens eines hohlen Körpers ausgelegt, wobei der Drehverteiler (1) zwei koaxiale Kränze (2, 3) aufweist, der eine (2) feststehend und der andere (3) drehbar, die jeweils über gegenüberstehende eine Verbindungsebene (P) definierenden Kontaktflächen (4, 5) dichtend miteinander in Kontakt sind, der drehbare Kranz (3) Kommunikationsöffnungen (6) aufweist, jede geeignet, um an mindestens eine Behandlungsstation gebunden zu sein und in die Kontaktfläche (5) des drehbaren Kranzes (3) mündend, wobei die Öffnungen auf mehreren konzentrischen Kreislinien (9) unterschiedlichen Durchmessers verteilt sind, der feststehende Kranz (2) mehrere Schlitze (7) aufweist, geeignet, um an eine Druckquelle der Maschine gebunden zu sein und in die Kontaktfläche (4) des feststehenden Kranzes (2) mündend, wobei die Schlitze auf konzentrischen Kreislinien (9) gleicher Anzahl und gleichen Durchmessers wie die der oben genannten Öffnungen verteilt sind, so dass mindestens ein Schlitz derartig auf der Umlaufbahn der Öffnungen (6) einer jeden Kreislinie des drehbaren Kranzes (3) liegt, dass eine Behandlungsstation mit der Druckquelle in Kommunikation gebracht wird, wenn die entsprechende Öffnung (6) dem jeweiligen Schlitz (7) gegenübersteht,
**dadurch gekennzeichnet, dass** alle Öffnungen (6) und/oder Schlitze (7) ein im Wesentlichen gleiches radiales Abmaß aufweisen und dadurch dass, in Drehrichtung (14) des drehbaren Kranzes (3) betrachtet, die vorderen und hinteren Ränder (11, 12) der Öffnungen und/oder Schlitze Krümmungsradien aufweisen, die im Wesentlichen bei den Öffnungen (6i) und/oder den Schlitzen (7i), zumindest angeordnet auf der Kreislinie (9i) geringsten Durchmessers, größer sind und im Wesentlichen bei den Öffnungen (6e) und/oder den Schlitzen (7e), angeordnet auf der Kreislinie (9e) größten Durchmessers, kleiner sind,
dank dessen, beim Gleiten der den jeweiligen Schlitzen (7) des feststehenden Kranzes (2) gegenüberstehenden Öffnungen (6), die Zunahmegeschwindigkeit während des Öffnens und die Abnahmegeschwindigkeit während des Schließens einer Durchgangsoberfläche (13), die durch jede Öffnung (6) und den zugehörigen Schlitz (7) definiert ist, bei allen Kreislinien (9) in etwa dieselbe ist.

2. Drehverteiler gemäß Anspruch 1, **dadurch gekennzeichnet, dass** die vorderen und hinteren Ränder (11i, 12i) der Öffnungen (6i) und/oder der Schlitze (7i), zumindest angeordnet auf der Kreislinie (9i) geringsten Durchmessers, in etwa geradlinig und in etwa radial ausgerichtet sind.

3. Drehverteiler gemäß Anspruch 2, **dadurch gekennzeichnet, dass** die Öffnungen (6i) und/oder die Schlitze (7i), zumindest angeordnet auf der Kreislinie (9i) geringsten Durchmessers, näherungsweise trapezoidal mit abgerundeten Ecken sind.

4. Drehverteiler gemäß einem der Ansprüche 1 bis 3, **dadurch gekennzeichnet, dass** die Öffnungen (6) des drehbaren Kranzes (3) in etwa dieselbe Winkelbreite (α) auf allen Kreislinien (9) aufweisen.

5. Drehverteiler gemäß einem der Ansprüche 1 bis 4, **dadurch gekennzeichnet, dass** die Schlitze (7) des feststehenden Kranzes (2) in etwa dieselbe Winkelbreite (α) auf allen Kreislinien (9) aufweisen.

6. Drehverteiler gemäß einem der Ansprüche 1 bis 5, **dadurch gekennzeichnet, dass** alle Schlitze (7) des feststehenden Kranzes (2) und alle Öffnungen (6) des drehbaren Kranzes (3) vollständig durchgehend ausgeführt sind.

7. Karussellmaschine zur Behandlung von Hohlkörpern des Typs, die mehrere identische Behandlungsstationen aufweist, geeignet zur Übernahme mindestens eines hohlen Körpers, wobei die Maschine mit einem Drehverteiler für mindestens eine Behandlungsstufe ausgestattet ist, der geeignet ist, um nacheinander jede Behandlungsstation mit mindestens einer Druckquelle in Kommunikation zu bringen, **dadurch gekennzeichnet, dass** der Drehverteiler (1) gemäß einem der Ansprüche 1 bis 6 ausgebildet ist.

8. Karussellmaschine gemäß Anspruch 7, **dadurch gekennzeichnet, dass** es sich um eine Maschine zur Beschichtung mit einer Schutzbeschichtung, insbesondere aus Kohlenstoff, auf die Innenfläche von Hohlkörpern, insbesondere von Flaschen aus thermoplastischem Material, insbesondere PET, mittels eines Niedrigdruckplasmas handelt.
